# EUROPÄISCHE PATENTANMELDUNG

(11) **EP 1 522 827 A1**
(43) Veröffentlichungstag der Anmeldung: **13.04.2005**
(21) Anmeldenummer: 04022553.4
(22) Anmeldetag: 22.09.2004
(51) Int. Cl.: G01F 1/56, G01F 1/58, G01F 1/64

(54) **Magnetisch-induktives Messgerät für strömende Stoffe und Verfahren zu dessen Herstellung**

(30) Priorität: 10.10.2003 DE 10347890
(71) Anmelder: ABB PATENT GmbH, 68526 Ladenburg (DE)
(72) Erfinder: Huybrechts, Dirk, Dr.-Ing, 69121 Heidelberg (DE); Schwiderski, Hans-Werner, Dipl.-Ing., 37176 Nörten-Hardenberg (DE); Rasche, Günter, Dipl.-Ing., 34434 Borgentreich (DE); Oehler, Arno Erich, 37124 Rosdorf (DE); Keese, Dieter, 37194 Wahlsburg (DE); Eifel, Dominik, Dipl.-Ing., 68723 Schwetzingen (DE); Asaah, Eniet, Dipl.-Ing., 68309 Mannheim (DE); Thöne, Andreas, 37154 Northeim (DE); Huck, Ralf, Dr.-Ing., 63457 Hanau (DE); Scholz, Wolgang, Dr.-Ing., 32427 Minden (DE); Lorito, Fabrizio, Mailand (IT); Vogel, Albrecht, Dr.-Ing., 76297 Stutensee (DE); Szasz, Paul, Dipl.-Ing., 68723 Plankstadt (DE)
(74) Vertreter: Miller, Toivo

(57) **Zusammenfassung**

Die Erfindung betrifft ein magnetisch-induktives Messgerät (1) für strömende Stoffe (Messstoff), mit wenigstens je einem Teilsystem
- zur Stoffführung (hydraulisches System, Messrohr) (2),
- zur Messsignalerfassung, umfassend einen Signalaufnehmer (Elektrodenanordnung (20, 22) zum Signalabgriff),
- zur Erzeugung eines Magnetfeldes, umfassend wenigstens zwei Erregerspulen (30) und einen ferromagnetischen Kern (32) (Magnetsystem), sowie
- zur umgebungsseitigen Gerätebegrenzung (Gehäuse),
und ist dadurch gekennzeichnet, dass wenigstens eines der Teilsysteme ganz oder teilweise durch Schichten aus Faserverbundwerkstoff gebildet und/oder in Schichten von Faserverbundwerkstoff eingebettet ist.

## Beschreibung

Die Erfindung betrifft ein magnetisch-induktives Messgerät für strömende Stoffe - im folgenden auch kurz MID genannt -, gemäß dem Oberbegriff des Anspruchs 1, sowie ein Verfahren zur Herstellung eines magnetisch-induktiven Messgerätes für strömende Stoffe gemäß dem Oberbegriff des Anspruchs 33.

Magnetisch-induktive Messgeräte für strömende Stoffe sind im Stand der Technik seit langem bekannt. Ihr prinzipieller Aufbau und das Wirkprinzip sind beispielsweise beschrieben im Lexikon der Mess- und Automatisierungstechnik, Herausgegeben von Elmar Schrüfer, VDI-Verlag Düsseldorf 1992, S. 262-263. Aufgrund des Wirkprinzips können magnetisch-induktive Messgeräte nur zur Messung des Durchflusses von elektrisch leitfähigen fluiden Stoffen eingesetzt werden. Es sind allerdings heute auch Geräte bekannt, bei denen zusätzlich zur Durchflussmessung auch eine Erkennung stattfindet, ob das Messrohr ganz, teilweise oder nicht befüllt ist.

Der einfache und robuste mechanische Aufbau, insbesondere das gerade Messrohr ohne eingebaute Hindernisse oder bewegte Teile macht sie zu bevorzugt eingesetzten Messgeräten in einer Reihe von industriellen Prozessanlagen, beispielsweise im Bereich der Wasserwirtschaft (Durchflussmessung in der Trinkwasserbereitung und Abwasseraufbereitung), im Bereich der chemischen und petrochemischen Industrie (Durchflussmessung von Wasser, Säuren, Laugen, etc.), im Bereich der pharmazeutischen Industrie und im Bereich der Lebensmittelindustrie (Durchflussmessung von Wasser, Säften, Bier, Milchprodukten etc.).

Die weite Bandbreite möglicher Einsatzgebiete spiegelt sich in der heute auf Herstellerseite bestehenden Notwendigkeit, eine Vielzahl von Produktvarianten vorzuhalten.

Magnetisch-induktive Messgeräte der gattungsgemäßen Art umfassen ein Messrohr, das von dem Messstoff durchflossen wird, und weitere, an das Messrohr angebrachte Teilsysteme, insbesondere ein Teilsystem zur Signalaufnahme, ein Teilsystem zur Erzeugung eines Magnetfeldes, kurz Magnetsystem genannt, ein Gehäuse zum Schutz vor Umwelteinflüssen und eine Anschlussvorrichtung zur Aufnahme der elektrischen Schnittstelle des Messgerätes.

Das Messrohr ist heute in der Regel ein Stahlrohr, mit oder ohne Endflanschen, mit am Außenumfang des Messrohres angeschweißten Verbindungselementen zur Montage anderer Gerätekomponenten und Teilsysteme an dem Messrohr. Der Einbau in das Prozessrohrleitungssystem kann entweder durch Flanschmontage erfolgen, oder auch durch Zwischenflansch-Montage, sog. Wafer-Montage.

Magnetisch Induktive Messgeräte werden heute in Applikationen mit einem Prozessdruck von über 40 bar eingesetzt, was sehr hohe Anforderungen an die Druck- und Verformungsfestigkeit des hydraulischen Systems stellt. Druckbedingte Verformungen, Vibrationen und andere Belastungen im hydraulischen System können zu Verzerrungen und geometrischen Verschiebungen in, auf dem Messrohr angebrachten, Signalaufnehmer- und Magnetsystemen führen und die Messgenauigkeit und Reproduzierbarkeit der Messung verschlechtern

Es sind heute für Nischenanwendungen auch Messrohre aus Keramik, teilweise mit darin eingebetteten Mess- und Abschirmelektroden, und aus Thermoplast bekannt. Keramikmessrohre sind allerdings teuer und spröde, und die Befestigung anderer Teilsysteme auf ihnen bereitet Schwierigkeiten. Thermoplastrohre sind nur für niedrige Prozessdrücke einsetzbar.

Als Teilsystem zur Signalaufnahme sind heute konduktive und kapazitive Signalaufnehmer bekannt. Beim konduktiven Signalaufnehmer stehen die Elektroden mit dem Messstoff galvanisch in Verbindung. Konduktive Signalaufnehmer sind heute üblicherweise zwei Elektroden, die durch Bohrungen in das Stahlrohr eingeführt werden. Da das Stahlrohr und die Elektroden elektrisch gegeneinander isoliert sein müssen, ist es heute nötig, das Stahlrohr innen mit einer elektrisch nicht leitenden Schicht auszukleiden, dem sog. Liner. Die Montage des Messgerätes wird dadurch sehr aufwändig. Außerdem besteht der Nachteil, dass wegen des direkten Kontaktes zwischen Elektrode und Messstoff und der dabei zum tragen kommenden Grenzflächeneffekte je nach Messaufgabe unterschiedliche Elektroden verwendet werden müssen, was zu einer erheblichen Variantenvielfalt der Messgeräte führt.

Beim kapazitiven Signalaufnehmer sind die Elektroden vom Messstoff galvanisch getrennt. Es werden flächenhafte Elektroden verwendet, die sich in oder hinter der elektrisch nicht leitfähigen Rohrauskleidung befinden. Außerdem sind Schirmelektroden zwischen Messelektrode und Messrohr zur Verhinderung des kapazitiven Durchgriffs nach außen vorgesehen.

Die Realisierung eines kapazitiven Signalabgriffs an Messrohren aus Stahl ist wegen der kapazitiven Wechselwirkung des Stahlrohrs mit dem elektrischen Feld der Elektroden schwierig. In Kombination mit Messrohren aus Keramik oder Thermoplast ist ein kapazitiver Signalaufnehmer zwar einfacher zu realisieren, allerdings mit den oben erwähnten Nachteilen der Messrohre.

Als Erweiterung des Signalaufnahmesystems wird heute in manchen magnetisch-induktiven Messgeräten wenigstens eine Bezugselektrode zur Bildung einer elektrischen "Erde" mit dem Messstoff verwendet.

Das Teilsystem zur Erzeugung eines Magnetfeldes, kurz Magnetsystem genannt, wird heute in der Regel durch zwei Spulen mit Polen und einer magnetischen Rückführung realisiert, die um das Messrohr herum montiert werden. Die bei der Montage einzuhaltenden geometrischen Toleranzen sind sehr gering, was die Montage aufwändig und teuer macht.

Die magnetische Rückführung wird üblicherweise aus mehreren übereinander geschichteten und miteinander vernieteten Blechstreifen realisiert. Es sind dabei mehrere Fertigungsschritte notwendig um sie in dieser Form zu erzeugen.

Das Gehäuse stellt in heute gebräuchlichen magnetisch-induktiven Durchflussmessem (MID) einen erheblichen Kostenfaktor dar, weil es entweder aus separaten, z.B. im Druckgussverfahren hergestellten Halbschalen oder auch als eine Blechschweisskonstruktion realisiert wird.

Ein technischer Nachteil besteht darin, dass die Elemente innerhalb des Gehäuses, z.B. Kabel, nicht durch die Anbringung des Gehäuses allein lagefixiert werden können. Vibrationen der Anschlussleitungen können, insbesondere bei kapazitiven Signalaufnehmern, zu erheblichen Signalstörungen und damit Messungenauigkeiten führen.

Die Anschlussvorrichtung zur Aufnahme der elektrischen Schnittstelle des Messgerätes ermöglicht die Verbindung des Messgerätes mit der Auswerteelektronik, die in einer häufig auch als Transmitter oder Messumformer bezeichneten Anschlussbaugruppe untergebracht ist. Der Transmitter kann sich räumlich getrennt vom Messgerät befinden, oder auch in die Anschlussvorrichtung integriert sein.

Der heute übliche Herstellungsprozess ist geprägt von relativ kleinen Seriengrößen pro Gerätevariante einerseits und einer hohen Anzahl an Gerätevarianten andererseits. Die Gerätevarianten unterscheiden sich beispielsweise durch unterschiedliche Messrohrquerschnitte und Messrohrwandstärken, um eine Anpassung an die Durchfluss- und Druckbereiche der jeweiligen Applikation zu erreichen. Da die Teilsysteme für Signalaufnahme und Magnetfelderzeugung mechanisch an das hydraulische System angebaut sind, bedingt jede Variante im hydraulischen System auch unterschiedliche Montagesätze für die angebauten Teilsysteme.

Es ist daher die Aufgabe der vorliegenden Erfindung, ein magnetisch-induktives Messgerät zu schaffen, das kostengünstig zu fertigen ist und die ganze Breite der Einsatzbereiche mit einer sehr geringen Variantenvielfalt abdeckt.

Die Aufgabe wird hinsichtlich des Messgerätes gelöst durch die kennzeichnenden Merkmale des Anspruchs 1, und hinsichtlich des Verfahrens zu dessen Herstellung durch die kennzeichnenden Merkmale des Anspruchs 33.

Erfindungsgemäß also ist wenigstens eines der Teilsysteme eines magnetisch-induktiven Messgerätes ganz oder teilweise durch Schichten aus Faserverbundwerkstoff gebildet und/oder in Schichten von Faserverbundwerkstoff eingebettet.

Gemäß einer bevorzugten Ausführungsform der Erfindung ist das Messrohr ganz oder teilweise aus Schichten eines Faserverbundwerkstoffes, insbesondere eines elektrisch nicht leitfähigen Faserverbundwerkstoffes, gebildet.

Als Faserverbundwerkstoff kommt insbesondere ein glasfaserverstärkter Kunststoff (GFK) in Frage. Das Messrohr kann vorteilhafterweise mittels einer aus der Verbundwerkstofftechnologie zur Herstellung anderer Bauelemente bekannten Faserwickeltechnik hergestellt werden. Es kann aber auch eine andere aus der Verbundwerkstofftechnologie bekannte Schichtaufbautechnik verwendet werden.

Ein erfindungsgemäßes Messgerät mit einem in Faserwickeltechnik gebildeten Messrohr vereinigt mechanische Stabilität und Drucktragkraft mit chemischer Beständigkeit und elektrischer Isoliereigenschaft. Es zeigte sich, dass ein in Faserwickeltechnik hergestelltes Messrohr aus GFK -Material bei geeignetem Durchmesser bereits mit einer Wandstärke von wenigen mm einem Rohrinnendruck von 40 bar ohne mechanische Deformation des Rohres dauerhaft standhält.

Da ein aus GFK gebildetes Messrohr ein elektrischer Isolator ist, wird keine zusätzliche isolierende Auskleidung (Liner) benötigt, was die Herstellung des Messgerätes deutlich vereinfacht und verbilligt. Wird in Verbindung mit einem GFK-Messrohr ein kapazitiver Signalabgriff realisiert, so tritt keine kapazitive Wechselwirkung zwischen dem GFK-Messrohr und den Messelektroden auf.

Alternativ können auch andere in der Verbundwerkstofftechnologie bekannte Herstellverfahren angewendet werden, wie z.B. das Resin Transfer Moulding (RTM)-Verfahren, das auf einem geeigneten Faservorformling und nachträglicher Imprägnierung mit Matrixharz beruht, oder das Prepreg/Autoklav-Verfahren, das auf vorimprägnierten Materialien basiert.

Alternativ zu Glasfasern als Füllstoff können auch andere, vorzugsweise elektrisch nichtleitende, aber mechanisch das Matrixharz verstärkende Fasermaterialien verwendet werden, wie z.B. Aramidfaser, PE-Faser oder Kevlar.

Wenn auf dem Messrohr aus Faserverbundwerkstoff weitere Teilsysteme, wie beispielsweise ein Signalaufnehmer oder ein Magnetsystem, befestigt werden sollen, so kann das entweder konventionell durch Schrauben oder Klemmen geschehen, oder die Komponenten werden durch partielles oder vollständiges Einwickeln an bestimmten Stellen mit bandförmigem Faserverbundwerkstoff festgehalten.

Es kann aber auch eine vorteilhafte Ausführungsform darin liegen, dass die Elektrodenanordnung ganz oder teilweise durch Schichten aus Faserverbundwerkstoff gebildet und/oder in Schichten aus Faserverbundwerkstoff eingebettet ist, oder dass das Magnetsystem vollständig oder teilweise aus Faserverbundwerkstoff gebildet und/oder in Schichten aus Faserverbundwerkstoff eingebettet ist.

Bei Einbettung der Elektrodenanordnung in Schichten aus Faserverbundwerkstoff können die Elektroden beim Wickeln der Schichten auf einfache Weise mit eingewickelt werden. Insbesondere bei kapazitivem Signalabgriff, wo üblicherweise flächenhafte Elektroden zum Einsatz kommen, lässt sich so eine deutliche Vereinfachung des Herstellungsprozesses bewirken.

Die Elektroden können dabei aus biegbarem Metallblech, Metallfolie oder aus leitfähigem Faserverbundwerkstoff, z.B. kohlenstofffaserverstärktem Faserverbundwerkstoff bestehen.

Die dielektrischen Eigenschaften des Harzes (geringe dielektrische Verluste, hohe Dielektrizitätszahl, geeigneter Frequenzgang der Dielektrizitätszahl etc.) können dabei an die Erfordernisse kapazitiver Signalaufnahme angepasst werden, wodurch sich die Variationsbreite der möglichen Produktausprägungen auf einen Bruchteil des heute üblichen und erforderlichen reduziert.

Neben dem Einbetten der Elektroden ist auch das Einbetten der elektrischen Zuleitungen in Schichten aus Faserverbundwerkstoff möglich. Die Zuleitungen sind dann ohne großen Aufwand vibrationsfrei gehalten, was eine erhöhte Messgenauigkeit und Störsicherheit zur Folge hat.

Das Einbetten in Faserverbundwerkstoff ermöglicht es, dass der Abstand der Messelektrode zum Messmedium sehr klein gewählt werden kann, bis hinunter zur Dicke einer einzelnen Wickelschicht aus Faserverbundwerkstoff. Bei heute üblicherweise verwendeten GFK-Materialien liegt diese Einzelschichtdicke in Bereichen von 0,1 bis 3 mm. Die Nähe zum Messmedium hat eine hohe Koppelkapazität und somit einen rauscharmen Signalabgriff zur Folge.

Beim Einwickeln der Elektroden in Faserverbundwerkstoff können diese auch aus perforierten Materialien gebildet sein, wie beispielsweise aus perforierter Metallfolie, Metallgewebe oder Gewebe aus leitfähigem Kunststoff. Der Vorteil bei der Verwendung solcher Materialien liegt darin, dass die vom magnetischen Wechselfeld des Magnetsystemsverursachten Wirbelströme in den Elektroden verringert werden und damit höhere Erregerfrequenzen angewandt werden können.

Der für das Betreiben nach dem kapazitiven Prinzip notwendige Impedanzwandler zur Signalverarbeitung kann in unmittelbarer Nähe der Messelektroden zusammen mit diesen in die Schichten aus Faserverbundwerkstoff eingebettet werden. Somit wird eine ungestörte Signalübertragung zwischen den Elektroden und dem Impedanzwandler gewährleistet.

Auch die Magnetrückführung oder sogar das komplette Magnetsystem kann in Schichten aus Faserverbundwerkstoff eingebettet werden, indem biegsames Halbzeug aus ferromagnetischem Material 'von der Rolle' in einer geeigneten Anzahl Durchläufe zusammen mit dem Faserverbundmaterial aufgebracht wird. Vorteilhafterweise verwendet man auch hier ein Wickelverfahren.

Hierdurch wird eine besonders ökonomische Herstellung ermöglicht, weil im Unterschied zu den bekannten Herstellungsverfahren für Magnetsysteme keine nennweitenspezifischen vorgeformten Teile mehr erforderlich sind, sondern ein Standardhalbzeug Verwendung finden kann.

Zusätzlich werden technische Vorteile erreicht: Es können bessere Betriebverhältnisse erreicht werden, da sich die Wirbelströme, die bei magnetischen Flussänderungen stets entstehen, aufgrund der Flussverteilung auf viele kleine Teilflächen nicht so gut ausbilden können wie bei herkömmlichen massiveren Gebilden. Hierdurch wird es möglich, höhere Erregerfrequenzen der Aufnehmer zu realisieren, und dies wiederum verkürzt die Ansprechzeit, wodurch schnellere Systeme entstehen. Außerdem wird der Rauschabstand zum normalen Fluidrauschen vergrößert, so dass ungestörtere Signale die Folge sind.

Gleichzeitig entstehen weniger Eisenverluste. Es kann entweder mit - im Vergleich zu herkömmlichen Geräten - weniger Leistung gefahren werden, wodurch Energieeinsparung zu verzeichnen ist, oder es kann - bei unveränderter Leistung - mit höherem Signalpegel gefahren werden, wodurch wiederum das Signal-Rauschverhältnis verbessert wird.

Ein weiterer Vorteil liegt in der sehr guten Lagefixierung des ferromagnetischen Kerns, wenn er in Schichten aus Faserverbundwerkstoff eingebettet ist. Während bei herkömmlichen Systemen ein hoher Aufwand getrieben werden muss, wenn es darum geht, ein vibrationsunempfindliches und schockresistentes System aufzubauen (durch mechanische Mittel oder zusätzliche Verklebungen) ist dies beim in Faserverbundwerkstoff eingebetteten Magnetsystem automatisch und ohne zusätzlichen Aufwand gegeben.

Die Temperaturverteilung ist ebenfalls günstiger als bei konventionell gefertigten Magnetsystemen, und es stellt sich eine gleichmäßigere Temperaturverteilung ein.

Es muss außerdem kein zusätzlicher Korrosionsschutz am Magnetsystem vorgenommen werden, da durch das Einbetten das Magnetsystem vollkommen geschützt ist.

Auch können Teile des Magnetsystems aus Faserverbundwerkstoff gebildet sein. Beispielsweise kann man die Spule aus dünnen Schichten von in eine faserverstärkte E-poxidmatrix eingebetteten Kupferdrähten aufbauen.

Insbesondere vorteilhaft ist eine Ausführungsform, derzufolge das Gehäuse aus Faserverbundwerkstoff gebildet ist. Dies ermöglicht die sehr kostengünstige Ausbildung des Gehäuses als einen von mehreren, sich logisch nacheinander ergebender Fertigungsschritten, oder auch als einen kostengünstigen separaten Fertigungsschritt.

Nach der Vormontage der elektrischen und magnetischen Komponenten des signalaufnehmenden Systems und des Magnetsystems werden diese Komponenten durch Aufbringen von Schichten aus Faserverbundwerkstoff mit einer die Gehäusefunktion realisierenden Schicht umgeben. Der Kostenvorteil ergibt sich daraus, dass nur wenig Material und Fertigungszeit für diesen Fertigungsschritt benötigt wird.

Der technische Vorteil ergibt sich daraus, dass hierbei alle Komponenten in hervorragender Art und Weise dauerhaft ortsfest fixiert werden, da das verwendete Halbzeug sich fast jeder beliebigen Oberflächengeometrie anpasst.

In die Wicklung des Gehäuses kann eine Abschirmschicht gegen elektromagnetische Störfelder (EMF-Abschirmung) durch Einwickeln integriert werden. Diese Schicht kann z.B. mit einem wickelbaren Halbzeug erzeugt werden, das aus einem metallischen Gewebe oder Geflecht, z.B. aus Kupfer o.ä. oder aus leitfähigen Faserverbundwerkstoffen, beispielsweise kohlenstofffaserverstärktem Kunststoff, besteht.

Besonders vorteilhaft ist schließlich eine solche Ausführungsform der Erfindung, in der der Signalaufnehmer und das Magnetsystem in das durch Schichten aus Faserverbundwerkstoff gebildete Messrohr eingebettet sind. Bei dieser Ausführungsform wird zunächst das Messrohr aus Faserverbundwerkstoff gewickelt, darauf dann nacheinander der Signalaufnehmer und anschließend das Magnetsystem und das Gehäuse, jeweils wie oben beschrieben, aufgewickelt. Der Vorteil dieser Ausführungsform liegt darin, dass durch die konsequente Integration aller Teilsysteme in Schichten aus Faserverbundwerkstoff ein sehr kostengünstig herstellbares Messgerät erhalten wird, das alle oben bei der Beschreibung der Einbettung der Einzelsysteme genannten Vorteile additiv in sich vereinigt.

Weitere vorteilhafte Ausgestaltungen und Verbesserungen der Erfindung und weitere Vorteile sind den weiteren Unteransprüchen zu entnehmen.

Anhand der Zeichnungen, in denen 13 Ausführungsbeispiele der Erfindung dargestellt sind, sollen die Erfindung sowie weitere vorteilhafte Ausgestaltungen und Verbesserungen der Erfindung sowie weitere Vorteile näher erläutert und beschrieben werden.

Es zeigen:
- Fig. 1: einen Querschnitt durch ein MID, bei dem Signalaufnehmer und Magnetsystem in das durch Schichten aus Faserverbundwerkstoff gebildete Messrohr eingebettet sind,
- Fig. 2: einen Längsschnitt durch ein MID nach Fig. 1, bei dem zusätzlich eine Bezugselektrode eingebettet ist,
- Fig. 3: einen Längsschnitt durch ein MID nach Fig. 1 mit konduktivem Signalabgriff,
- Fig. 4: einen Querschnitt durch ein MID nach Fig. 1, bei dem die stoffseitige Gerätebegrenzungsfläche nanostrukturiert ist,
- Fig. 5: einen Längsschnitt durch ein MID, bei dem das Gehäuse aus Faserverbundwerkstoff gebildet ist,
- Fig. 6: einen Längsschnitt durch eine weitere Variante eines MID, bei dem das Gehäuse aus Faserverbundwerkstoff gebildet ist,
- Fig. 7: einen Querschnitt durch ein MID, bei dem nur das Teilsystem zur Signalaufnahme in Schichten von Faserverbundwerkstoff eingebettet ist,
- Fig. 8: einen Längsschnitt durch ein MID, bei dem nur das Magnetsystem vollständig in Schichten aus Faserverbundwerkstoff eingebettet ist,
- Fig. 9: einen Längsschnitt durch ein MID, bei dem nur das Magnetsystem teilweise in Schichten aus Faserverbundwerkstoff eingebettet ist,
- Fig. 10: einen Querschnitt durch ein MID, bei dem nur das Messrohr aus Faserverbundwerkstoff gebildet ist,
- Fig. 11: einen Querschnitt durch ein MID, bei dem das Messrohr teilweise aus Faserverbundwerkstoff gebildet ist,
- Fig. 12: einen Längsschnitt durch ein MID, bei dem zusätzliche Sensoren zur Temperatur- und Dehnungsmessung in die Rohrwand eingebettet sind, und
- Fig. 13: einen Längsschnitt durch ein MID, bei dem zusätzlich optische Analysevorrichtungen vorgesehen sind.

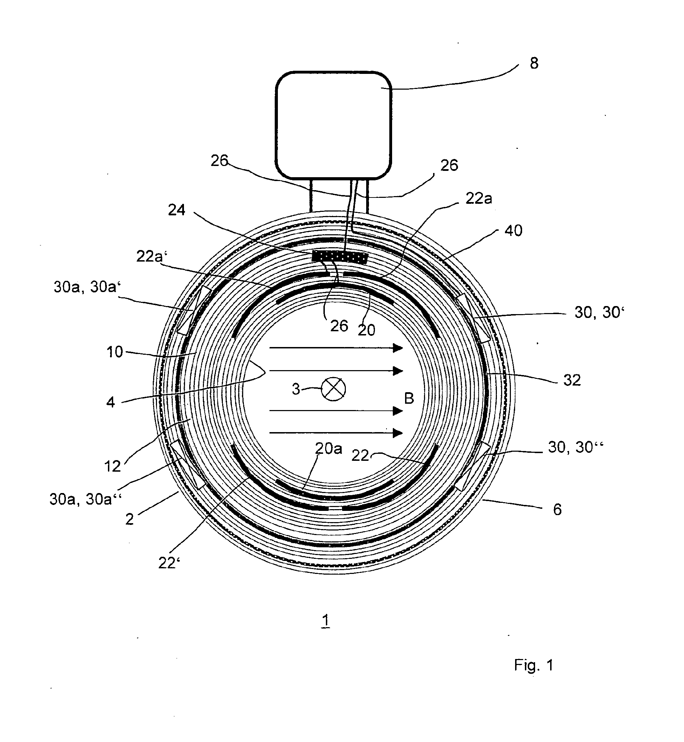

Fig 1 zeigt einen Querschnitt durch ein magnetisch induktives Messgerät 1, welches ein Messrohr 2 mit einer stoffseitigen Gerätebegrenzungsfläche 4 und einer umgebungsseitigen Gerätebegrenzungsfläche 6 und eine Anschlussbaugruppe oder einen Transmitter 8 umfasst. Das Messrohr 2 ist durch Schichten von Faserverbundwerkstoff gebildet, indem einzelne Lagen aus Faserhalbzeug 10 mit einem Kunststoffharz 12 einen Werkstoffverbund bilden. In der Fig 1 ist die Schichtung im Querschnitt durch konzentrische Kreise angedeutet. Bei einer anderen Art der Schichtung mittels kontinuierlichen Aufwickelns des Halbzeugs würde ein spiralförmiges Muster entstehen.

Zur Herstellung des Messrohres aus Faserverbundwerkstoff kann jede in der Komposit-Materialtechnik bekannte Methode in angepasster Form angewendet werden. Typische Dicken von einzelnen Faserverbundwerkstoffschichten liegen in der Größenordnung von 0,12 mm - 3 mm.

In dem MID ist ein kapazitives Signalaufnehmer-Teilsystem, umfassend zwei sich senkrecht zur Rohrachse 3 gegenüberliegende Messelektroden 20, 20a und zwei jeweils eine Messelektrode nach außen abschirmende Abschirmelektroden 22,22a die hier geteilt ausgeführt sind (22, 22'; 22a, 22a'), um eine Durchführung für Messzuleitung 26 freizuhalten.

Die Elektroden 20, 20a, 22, 22a sind aus flächenhaften Metallblechen oder Folien mit - im in die Ebene abgewickelten Zustand - im Wesentlichen rechteckiger Umfangskontur gebildet und parallel zur Messrohrachse 3 in Form von Zylindermantelsegmenten angeordnet.

Die Elektroden 20, 20a, 22, 22a könnten auch aus perforierten Materialien, wie z.B. Metallgewebe oder Gewebe aus leitfähigem Kunststoff gebildet sein.

In Fig 1 sind die Messelektroden 20, 20a in einem Abstand von etwa 4 Wicklungsschichten von der stoffseitigen Gerätebegrenzungsfläche angeordnet. Bei einer angenommenen Einzelschichtdicke von 0,5mm entspräche dies einem Abstand von 2 mm. Ein Faserverbundwerkstoffrohr mit 2 mm Wandstärke kann einen Rohrinnendruck von bis zu 40 bar tragen, ohne dass es zu unzulässigen Deformationen kommt. Das Signalerfassungs-Teilsystem des MID nach Fig. 1 ist also keinen unzulässigen mechanischen Deformationen aufgrund des Rohrinnendruckes ausgesetzt.

Unzulässig sind Deformationen insbesondere dann, wenn durch sie Schäden an dem Gerät hervorgerufen werden oder sich die Elektroden oder andere Anbauteile an das Rohr deformationsbedingt so verschieben, dass die Messgenauigkeit herabgesetzt wird.

In der Nähe der Elektroden 20, 20a, 22, 22a ist eine elektronische Signalvorverarbeitungsbaugruppe 24, im Wesentlichen ein Impedanzwandler und ein Signalvorverstärker, mit in die Schichten eingebettet, ebenso wie die Messsignalzuleitungen 26 von den Elektroden 20,20a, 22, 22a zur Signalvorverarbeitungsbaugruppe 24 und von der Signalvorverarbeitungsbaugruppe 24 zum Transmitter 8.

Das Magnetsystem des MID nach Fig. 1 besteht aus zwei kreisförmigen Erregerspulen 30, 30a und einem ferromagnetischen Kern 32 zur magnetischen Rückführung. Die Wicklungsebenen der kreisringförmigen Spulen 30, 30a verlaufen parallel zueinander und zur Rohrmittelachse 3. Wegen der Darstellung im Querschnitt sind von den kreisringförmigen Spulen 30, 30a nur die Schnittflächen 30', 30", 30a', 30a" zu sehen.

Der ferromagnetische Kern 32 besteht aus einem biegsamen ferromagnetischem Blech, das zwischen den beiden Spulen 30, 30a einer inneren Zylindermantelfläche des Messrohres folgt und somit den magnetischen Rückfluss gewährleistet, und ist in die Schichten aus Faserverbundwerkstoff eingebettet. Die Erregerspulen sind konventionell gewickelte Spulen. Sie sind zusammen mit den Zuleitungen 26 zu den Erregerspulen 30, 30a in den Faserverbundwerkstoff fest eingebettet.

Zur Herstellung eines erfindungsgemäßen MID nach Fig. 1 werden Verfahren aus der an sich bekannten Herstellungstechnik von Bauteilen aus faserverstärkten Kunststoffen entlehnt, hier insbesondere das Wickelverfahren. Dabei werden die im Folgenden beschriebenen Prozessschritte durchlaufen.

Als erstes wird auf einen zylindrischen Kern aus Metall, beispielsweise Aluminium, eine erste, innere Schicht aufgewickelt. Diese kann entweder aus harzgetränkten Fasern in Form eines sog. Rovings oder aus Faserhalbzeug in Form z.B. eines auf die Gesamtbreite des Messrohres zugeschnittenen sog. Geleges mit geeigneten einzelnen Faserschichten bestehen.

Auf dieser ersten Schicht werden einige weitere Schichten aufgewickelt, und darauf die Messelektroden fixiert und von einigen weiteren Faserhalbzeugschichten umwickelt.

Man könnte auch die Messelektroden bereits auf die erste Faserhalbzeugschicht aufbringen. In diesem Falle wären die Messelektroden noch näher am Messstoff, was eine noch höhere Empfindlichkeit der Messung bedeutet.

Das Fixieren kann bei der Gelege-Technik beispielsweise mittels Klebepunkten erfolgen. Wenn anschließend entsprechend vorsichtig eingewickelt wird, erreicht man eine sehr hohe Positioniergenauigkeit der Elektroden.

Entsprechend wird anschließend mit den Schirmelektroden 22, 22a den Signalzuleitungen 26 und der Signalwandlerbaugruppe 24 verfahren. Anschließend wird die Wandung durch einige weitere Schichten aufgedickt.

Als nächstes werden nun die Teile des Magnetsystems, der ferromagnetische Kern und die Erregerspulen, wiederum zunächst provisorisch fixiert, und anschließend eingewickelt und damit endgültig befestigt. Die Erregerspulen werden so angebracht, dass das Magnetfeld im Rohrinnenraum senkrecht zur Rohrmittelachse 3 und senkrecht zu der Verbindungslinie zwischen den Messelektroden 20, 20a verläuft, wie in Fig. 1 durch die Pfeile B angedeutet.

Bei dem Magnetsystem kommt es auf eine sehr hohe Positioniergenauigkeit an, insbesondere auf eine geringe Verdrehung, wenn eine hohe Messgenauigkeit erreicht werden soll. Bei entsprechend vorsichtigem Wickeln ist die erreichbare geometrische Präzision sehr hoch. So kann man eine Verdrehung der Spulen und des Kerns von weniger als 1° erreichen.

Nun werden noch einige weitere Schichten aufgewickelt, um einen Schutz des Magnetsystems vor Umwelteinflüssen zu erreichen. Anschließend wird noch eine Abschirmschicht 40 aus leitfähigem Material, beispielsweise aus einem Faserhalbzeug aus elektrisch leitfähigem Material wie z.B. aus leitfähigen Kohlenstofffasern, aufgewickelt, und diese wieder mit einigen letzten äußeren Schutzschichten umwickelt. Die äußeren Schutzschichten schützen vor allen äußeren Einflüssen, so dass das Messgerät als Ganzes der entsprechenden Schutzklasse, beispielsweise IP 68, genügt. Sie können dabei auch aus anderem Halbzeug bestehen, beispielsweise aus Aramidfaserverstärktem Material, wenn das Messrohr aus GFK Halbzeug aufgebaut ist. Es kann auch - hier nicht dargestellt - eine zusätzliche Abschirmschicht in den Raum zwischen den Elektroden und dem Magnetsystem eingebettet werden.

Beim Wickeln müssen die Messsignalleitungen 26 und die Zuleitungen zu den Spulen 30 und zu der Signalwandlerbaugruppe 24 zwischen den einzelnen Wicklungsschichten hindurchgeführt werden.

Auf dem fertig gewickelten Messrohr wird dann noch eine Anschlussvorrichtung 8 befestigt. Dies kann entweder durch Schrauben oder Kleben geschehen, oder auch wieder durch Einwickeln mit bandförmigem Halbzeug, so dass die Anschlussbuchsen und ggf. die Bedien- und Anzeigeelemente frei bleiben.

Die Anschlussvorrichtung 8 kann dabei entweder lediglich zur Kontaktierung dienen und selbst keine elektronischen Baugruppen enthalten, sondern nur Anschlusselemente, mit denen das Messgerät elektrisch an seine Systemumgebung angeschlossen wird (Energieversorgung und Signalableitung). Sie kann aber auch bereits vielfältige funktionelle Baugruppen zur Signalverarbeitung, Filterung, Speicherung und Übertragung - entweder über Buskabel oder auch drahtlos mittels Radiosender, Bluetooth oder anderer gängiger Signalübertragungsprotokolle -enthalten und wird dann üblicherweise als Transmitter bezeichnet.

Schließlich wird als letzter Schritt der Kern wieder entfernt, indem er aus dem fertig ausgehärteten Rohr herausgezogen wird. Bekannte Techniken wie z.B. Erwärmen des Kerns können dabei unterstützend angewendet werden.

Eine Variante des Herstellverfahrens besteht darin, dass als Kern ein zylindrischer Schlauch aus Liner-Material, beispielsweise Thermoplast, verwendet wird. Der Schlauch kann beispielsweise durch Beaufschlagung von Druckgas (Druckluft beispielsweise) in die erforderliche zylindrische Form gebracht werden. Nach dem Aufbringen des Faserverbundwerkstoffes mit allen eingebetteten Komponenten und Teilsystemen auf den Liner kann der Liner-Kern wieder durch Herausziehen entfernt werden.

In einer weiteren Ausführungsform, hier nicht in einer Fig. dargestellt, verbleibt der Liner nach Aufbringen der Faserverbundwerkstoff-Schichten im Inneren des Messgerätes.

Im Ergebnis erhält man dadurch in dieser Variante ein gattungsgemäßes Messgerät aus Faserverbundwerkstoff mir einem konventionellen Liner.

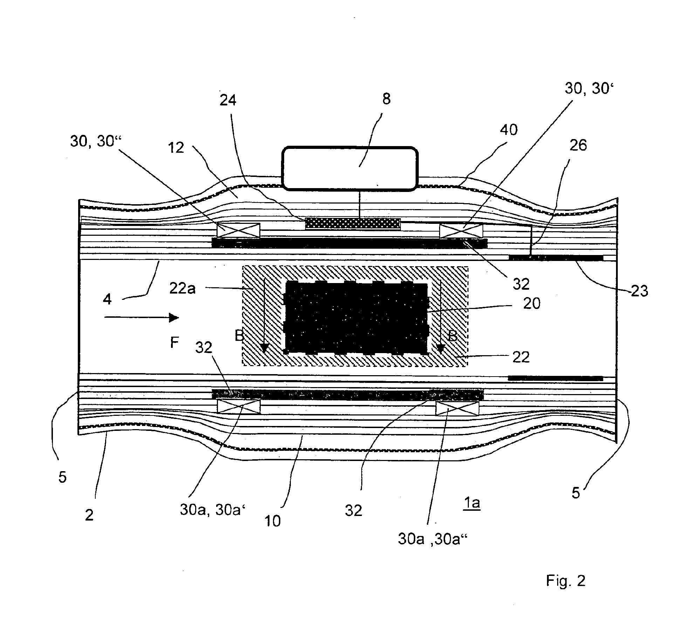

In den Figuren 2 bis 13 ist eine, nicht als abschließend zu betrachtende, Anzahl von Varianten der oben ausführlich dargestellten Ausführungsform nach Fig. 1 gezeigt. Im Folgenden sollen daher im Wesentlichen die sich von der Ausführungsform nach Fig. 1 unterscheidenden Teile besprochen werden. Gleiche oder gleichwirkende Teile oder Baugruppen werden dabei jeweils mit den gleichen Bezugsziffern bezeichnet.

Fig. 2 zeigt einen Längsschnitt durch ein erfindungsgemäßes MID mit kapazitivem Signalabgriff. Die strichliierte Umrandung bei der Mess- und Schirmelektrode 20, 20a, 22, 22a zeigt an, dass diese sich eingebettet hinter der ersten Wicklungsschicht des Messrohres 2 befinden, sie haben keinen direkten Kontakt mit dem Messstoff.

Ansonsten entspricht der Aufbau des Messgerätes nach Fig. 2 im wesentlichen demjenigen nach Fig. 1, mit der Ergänzung, dass an der Messrohrinnenseite eine ringförmige Bezugselektrode 23 eingebettet wurde, so dass diese in elektrischem Kontakt mit dem Messstoff steht. Eine Signalleitung führt von der Bezugselektrode 23 zu der Signalwandlerbaugruppe 24. In manchen Messkonfigurationen ist es nötig, das Bezugspotential für die Messung in den Messstoff zu legen, dafür dient die Bezugselektrode 23.

Die Bezugselektrode 23 wird aus einem Metallblech, einem Stück Metallfolie oder aus elektrisch leitfähigem Faserverbundhalbzeug hergestellt, indem diese direkt auf den Kern aufgelegt und anschließend von den ersten Wickelschichten umhüllt wird. Nach dem Entfernen des Kerns hat die Bezugselektrode dann galvanischen Kontakt zum Messstoff.

Die Oberflächenkontur des Messrohres 2 kann aufgrund der Wickeltechnik in weiten Grenzen gestaltet werden. So zeigt Fig. 2 als Beispiel ein Messrohr mit einer Aufdickung zu den beiden seitlichen Dichtflächen 5 und zur Mitte hin, dazwischen liegt je eine konvexe Einschnürung. Die Anschlussvorrichtung 8 ist teilweise in die Messrohwand eingelassen und darin festgeklebt oder verpresst.

Die Einbindung des Messgerätes nach Fig. 2 erfolgt beispielsweise in Wafer-Montage oder Zwischenflansch-Einbautechnik.

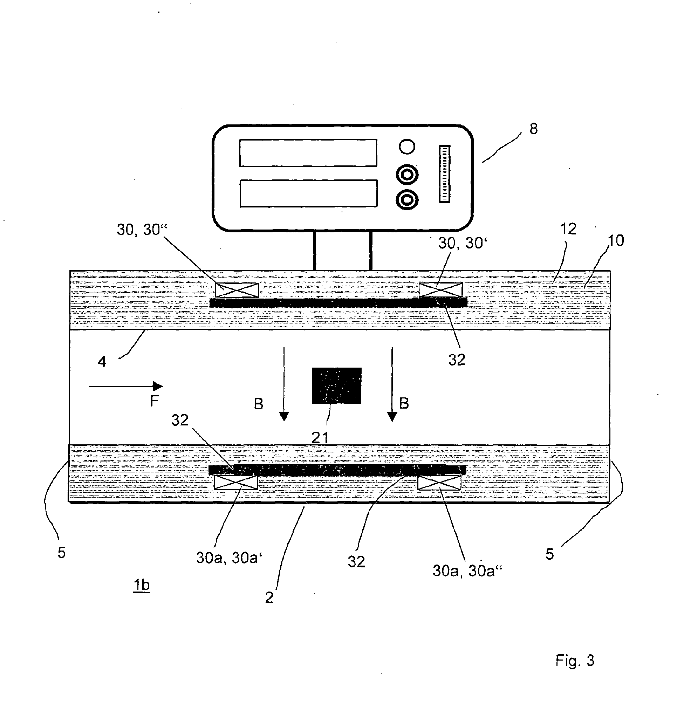

Fig. 3 zeigt eine Variante eines erfindungsgemäßen MIDs, die sich von der nach Fig. 1 im Wesentlichen dadurch unterscheidet, dass ein konduktiver Signalabgriff realisiert ist. Die Messelektroden 21, 21' stehen in galvanischem Kontakt mit dem Messstoff, dessen Strömungsrichtung im Messrohr 2 durch den Pfeil F angedeutet ist. Sie ist in Fig. 3 als rechteckige Elektrode angegeben, kann aber selbstverständlich nahezu beliebig geformt sein, beispielsweise auch rund oder oval. Ihre Ausdehnung ist wesentlich geringer als die der kapazitiven Elektrode, üblicherweise hat sie einen Durchmesser von einigen mm bis einigen cm. Die Messelektrode 21 ist auch in die Schichten aus Faserverbundwerkstoff eingebettet, nach einem ähnlichen Verfahren, wie es bei Fig. 2 für das Einbetten der Bezugselektrode beschrieben wurde. Das für die Messelektrode 21 zu wählende Material wird entsprechend demjenigen bei konventionellen MIDs festgelegt und ist von der vorgesehenen Applikation abhängig.

Da allerdings bei einem erfindungsgemäßen Aufbau des MIDs nach Fig. 3 das Messrohr aus elektrisch nicht leitendem Faserverbundwerkstoff gebildet ist, entfällt die Notwendigkeit, bei Anwendung des konduktiven Prinzips eine isolierende Auskleidung (einen Liner) einzuziehen. Die Messelektrode 21 kann direkt in das Rohrwandmaterial eingebettet werden, zusammen mit dem Magnetsystem 30, 30', 30",30a, 30a', 30a", 32, 32', 32", was die Fertigung eines solchen Messgerätes erheblich vereinfacht.

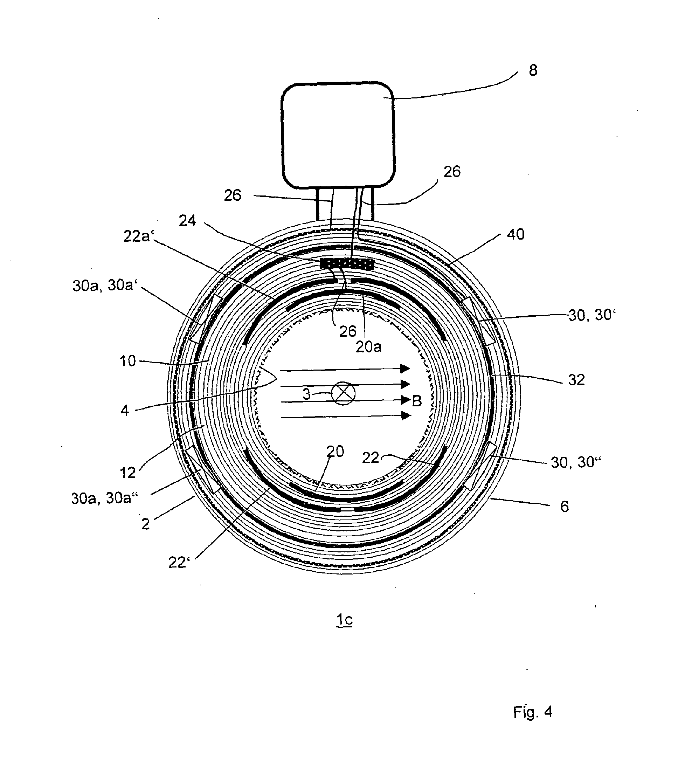

Die in Fig. 4 gezeigte Ausführungsform eines erfindungsgemäßen MID unterscheidet sich von der in Fig. 1 gezeigten dadurch, dass die stoffseitige Gerätebegrenzungsfläche 4 nanostrukturiert und adhäsivitätsreduziert ausgebildet ist, beispielsweise in Art einer Lotusblattoberfläche. Der Vorteil liegt darin dass die medienberührende Rohrinnenfläche dadurch eine selbstreinigende Eigenschaft bekommt und weniger anfällig ist für Ablagerungen aus dem Messstoff. Der Selbstreinigungseffekt nach dem Prinzip der Lotusblattoberfläche beruht darauf, dass die Oberfläche Strukturen im Nanometermaßstab aufweist, durch die bei der Anlagerung von Partikeln aus dem Messstoff ein bestimmtes Verhältnis von Oberflächenspannung zu Adhäsionskraft erzeugt wird, so dass die wirksame Adhäsionskraft des Partikels auf der Oberfläche stark herabgesetzt ist.

Die Partikel können somit bereits durch die normale Messstoffströmung wieder abgetragen werden, wodurch sich die innere Rohroberfläche 4 immer wieder selbst reinigt.

Hergestellt werden kann die Nanostruktur auf der stoffseitigen Gerätebegrenzungsfläche 4 beispielsweise dadurch, dass eine entsprechende Matrix auf der Oberfläche des zylindrischen Metallkerns angebracht und die Struktur dann beim Wickeln der ersten Schicht aus Faserverbundmaterial in dieses abgeformt wird. Eine andere Möglichkeit würde darin bestehen, dass als erste Schicht auf den zylindrischen Metallkern eine dünne Kunststoffschicht aufgebracht wird, beispielsweise durch Aufschleudern oder Eintauchen, in die sich die Nanostruktur der Matrix abformt. Anschließend wird darauf die erste Schicht aus Faserverbundmaterial aufgebracht. Die stoffseitige Gerätebegrenzungsfläche würde dann durch die dünne, nanostrukturierte Kunststoffschicht gebildet, die mechanische Stabilität und die Tragfunktion für die anderen Teilsysteme würde durch den Strukturwerkstoff Faserverbundmaterial gewährleistet.

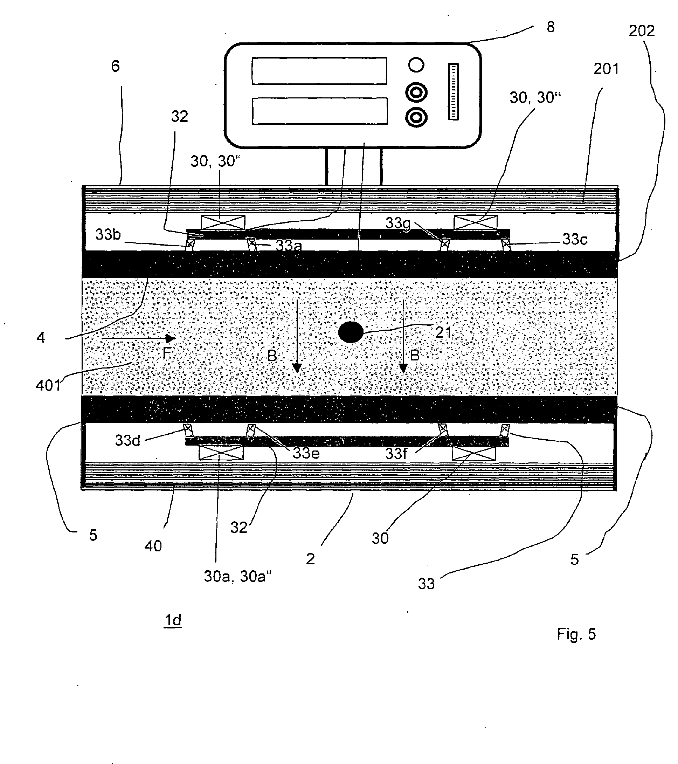

Fig. 5 zeigt ein Ausführungsbeispiel der Erfindung, bei dem nur das Gehäuse 201 aus Faserverbundwerkstoff gebildet ist, die anderen Teilsysteme dagegen konventionell aufgebaut sind. Insbesondere ist das Messrohr 202, ein Messrohr aus Stahl, das innen mit einer Kunststoffauskleidung 401 (Liner) ausgekleidet ist. An der Außenseite des Messrohres ist ein Magnetsystem mit zwei Erregerspulen 30, 30a und einem ferromagnetischen Kern 32 mittels bekannter Montagemittel 33a, 33b, 33c, 33d, 33e, 33f, 33g - das sind Träger, Bolzen, Schrauben, Klemmen und ähnliche Teile -, die in der Fig. 5 nur schematisch angedeutet sind und hier nicht näher beschrieben zu werden brauchen, da sie dem Fachmann auf dem Gebiet des Baues von MIDs hinlänglich bekannt sind, angebracht. Der Signalabgriff findet konduktiv mittels zweier sich gegenüberliegender Elektroden 21 statt, von denen nur eine sichtbar ist und die senkrecht zur Rohrmittelachse F und der Magnetfeldrichtung B angebracht sind, mit dem Messmedium galvanisch in Kontakt stehen und von dem Stahlrohr elektrisch isoliert sind. Um das Magnetsystem herum ist ein Gehäuse 201 aus Schichten von Faserverbundwerkstoff nach dem oben beschriebenen Verfahren gebildet. In das Gehäuse ist auch eine Abschirmschicht 40 aus leitfähigem Material eingebracht. Die in der Fig. 5 dargestellte hohlzylindrische Ausprägung des Gehäuses ist nur eine von mehreren Formungsmöglichkeiten, die sich durch das Schichtaufbauverfahren mittels Faserverbundwerkstoff ergeben. Die das Gehäuse bildenden Schichten können sich auch der Kontur des Magnetsystems mehr oder weniger anpassen.

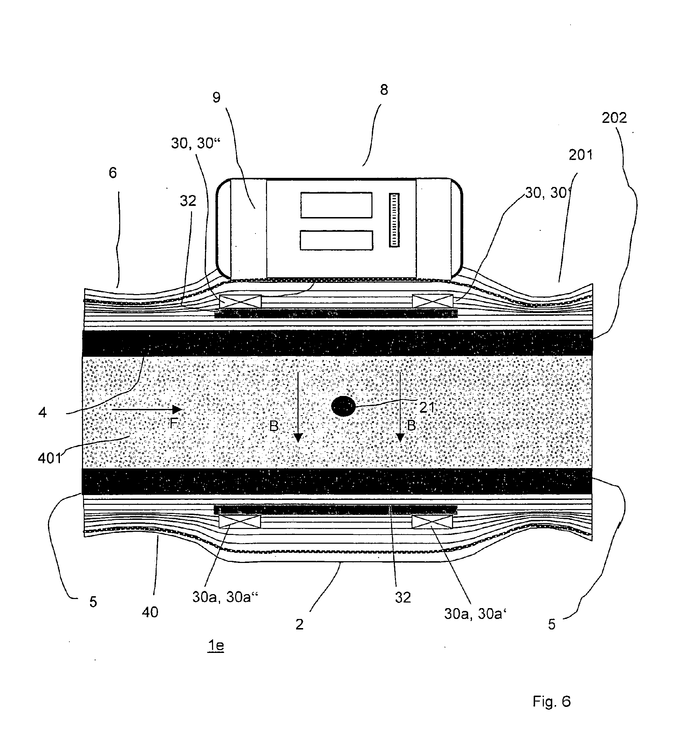

Die in Fig. 6 gezeigte Ausführungsform umfasst ein konventionelles Stahlmessrohr 202 mit Liner 401 und konduktivem Signalabgriff über den Messstoff galvanisch kontaktierende Elektroden 21. Hier ist - im Unterschied zu der Ausführungsform nach Fig. 5 - das Magnetsystem mit Erregerspulen 30, 30a und ferromagnetischem Kein 32 - beispielsweise nach der oben unter Fig. 1 beschriebenen Methode - in die das Gehäuse bildenden Schichten eingebettet, ebenso die Abschirmschicht 40. Der Transmitter 8 ist an seiner Unterseite teilweise in die obersten Gehäuseschichten eingelassen und mit zwei Befestigungsbändem 9, die auch aus Faserverbundwerkstoff gebildet sind und in der gleichen Wickelmethode aufgebracht werden, in der auch das Gehäuse aufgebaut wird, an seinen beiden Außenseiten auf dem Gehäuse befestigt, indem er sozusagen festgewickelt ist.

Das Messrohr 202 in der Ausführungsform nach Fig. 6 und 5 könnte selbstverständlich auch aus Keramik bestehen mit eingebetteten oder daran angebrachten kapazitiven Signalabgriffelektroden.

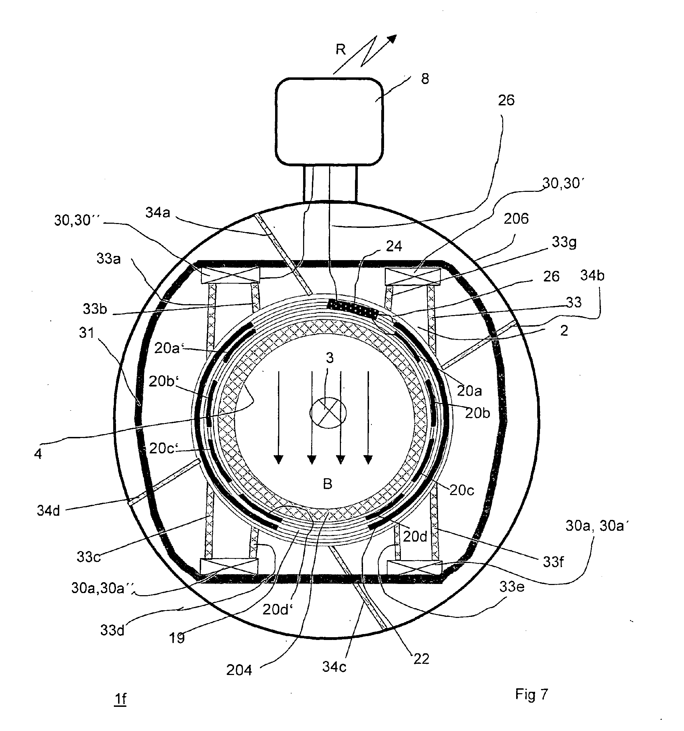

Die Ausführungsform nach Fig. 7 stellt ein MID dar, bei dem nur das Teilsystem zur Messsignalerfassung, ausgebildet als kapazitives Signalabgriffsystem, in Schichten aus Faserverbundwerkstoff eingebettet ist, wodurch eine Faserverbund-Einbettung 19 des Messsystems entsteht, die anderen Teilsysteme hingegen in konventioneller Art und Weise aufgebaut sind. Das Messrohr 204 ist hier ein Keramikrohr, es könnte aber auch ein Thermoplastrohr sein. Auf das Messrohr sind -beispielsweise nach dem oben unter Fig. 1 beschriebenen Verfahren - Mess - und Schirmelektroden 20, 20a, 22, 22a in Schichten aus Faserverbundwerkstoff eingebettet, zusammen mit den Signalleitungen 26 und einer Signalwandlerbaugruppe 24 (es sind aus Gründen der Übersichtlichkeit nicht alle Signalleitungen in der Fig. 7 eingezeichnet). Direkt auf das Messrohr ist zunächst eine oder mehrere Schichten Faserverbundwerkstoff aufgebracht, bevor dann die Messelektroden 20, 20a aufgebracht sind.

In dem Ausführungsbeispiel der Fig. 7 ist beispielhaft eine Mehrelektrodenanordnung mit 4 Messelektrodenpaaren 20a, 20a' 20b, 20b', 20c, 20c', 20d, 20d' gezeigt, wobei die Messelektrodenpaare 20a,b,c,d jeweils ein Segment der inneren Mantelfläche des Messrohres bedecken. Mit einer solchen Mehrelektrodenanordnung ist es möglich, neben der Durchflussmessung auch noch eine Füllstandserfassung und -messung vorzunehmen. Diese Art der Füllstandserfassung und -messung mittels kapazitiver Mehrelektrodenanordnungen ist im Stand der Technik grundsätzlich bekannt. Sie ist nicht auf vier Messelektrodenpaare beschränkt, es können auch drei, vier, fünf, sechs, sieben, acht oder noch mehr Elektrodenpaare angeordnet sein. Bei der im Ausführungsbeispiel nach Fig. 7 gezeigten Kombination dieser Art der Messung mit der Einbettung der Messelektrodenpaare in Schichten aus Faserverbundwerkstoff ergibt sich der große Vorteil, dass die Messelektrodenpaare sehr präzise positioniert werden können, nach der Einbettung unverrückbar festgehalten sind, die Messleitungen nicht mehr vibrieren oder verrutschen können und die elektrodennahe Impedanzwandlung und Signalvorverstärkung in der Signalwandlerbaugruppe 24 eine Erhöhung der Messgenauigkeit bei verringertem Fertigungsaufwand zur Folge hat.

Das Magnetsystem ist in der Ausführungsform nach Fig. 7 konventionell aufgebaut aus Erregerspulen 30, 30a und ferromagnetischem Kern 31 zur magnetischen Rückführung, und mit Befestigungsmitteln 33a , b,c,d,e,f,g an der Faserverbund-Einbettung 19 befestigt. Auch das Gehäuse 202 ist ein konventionell aufgebautes und mittels Gehäuseaufbaumitteln 34a,b,c,d angebrachtes Metallgehäuse.

Der Transmitter 8 umfasst hier eine drahtlose Signalübertragungseinheit, zur drahtlosen Signalübertragung -angedeutet durch den Pfeil R - und damit drahtlosen Einbindung des MIDs in ein übergeordnetes Prozessleitsystem.

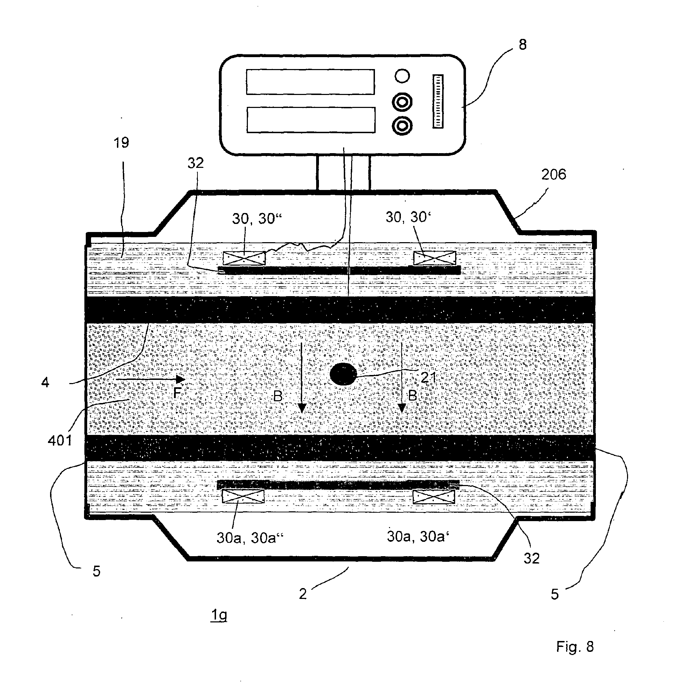

In der in Fig. 8 dargestellten Ausführungsform ist nur das Magnetsystem mit Erregerspulen 30, 30a und ferromagnetischem Kern 32 - beispielsweise nach der oben unter Fig. 1 beschriebenen Methode - vollständig in Schichten aus Faserverbundwerkstoff eingebettet. Die so entstehende Faserverbund-Einbettung 19 umgibt ein konventionelles Stahl-Messrohr 202 mit Auskleidung 401 und konduktiver Elektrode 21. Auch das Gehäuse 206 ist in dieser Ausführungsform in konventioneller Weise aus Metall gebildet. Der Vorteil dieser Ausführungsform liegt in der kostengünstigen Herstellbarkeit bei sehr hoher geometrischer Präzision des Magnetsystems, unter Beibehaltung bewährter Teilsysteme für Messrohr, Signalabgriff und Gehäuse.

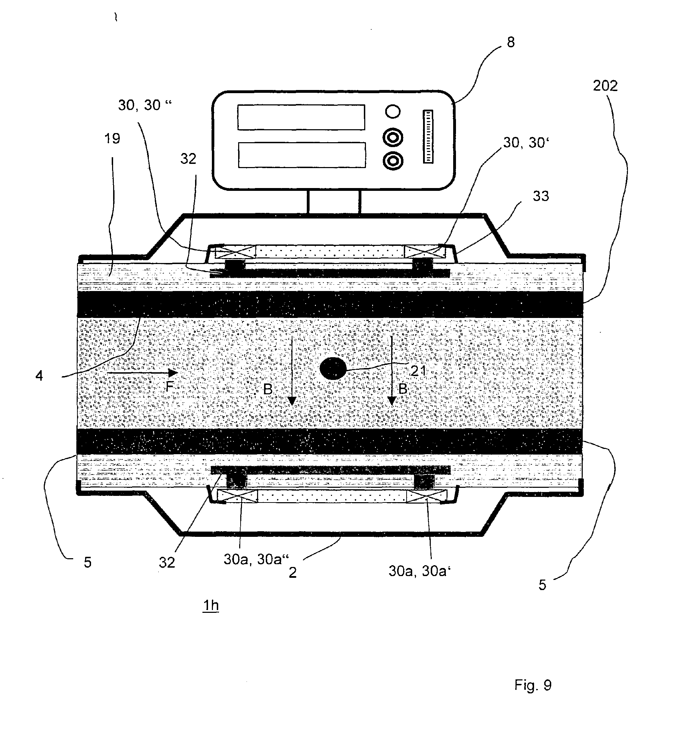

Fig. 9 zeigt einen Längsschnitt durch eine Ausführungsform eines erfindungsgemäßen MIDs, bei dem das Magnetsystem teilweise in Schichten aus Faserverbundwerkstoff eingebettet ist. Der ferromagnetische Kern 32 ist in Schichten aus Faserverbundwerkstoff eingebettet, die Erregerspulen 30, 30a sind auf der resultierenden Faserverbund-Einbettung 19 mit Befestigungsmitteln 33a,b,c,d,e,f,g befestigt. Es könnten auch die Erregerspulen 30, 30a in der Faserverbund-Einbettung 19 eingebettet sein und der ferromagnetische Kern in konventioneller Art und Weise darauf montiert sein.

Die Ausführungsform nach Fig. 9 bietet gegenüber einer konventionellen Aufbauweise eines MIDs immer noch Kostenvorteile und erhöhte geometrische Präzision bei der Befestigung des Magnetsystems, gleichzeitig erfordert sie eine weniger weitgehende Umstellung des Produktionsverfahrens als die Ausführungsformen wie sie in Fig. 8 oder 6 dargestellt sind.

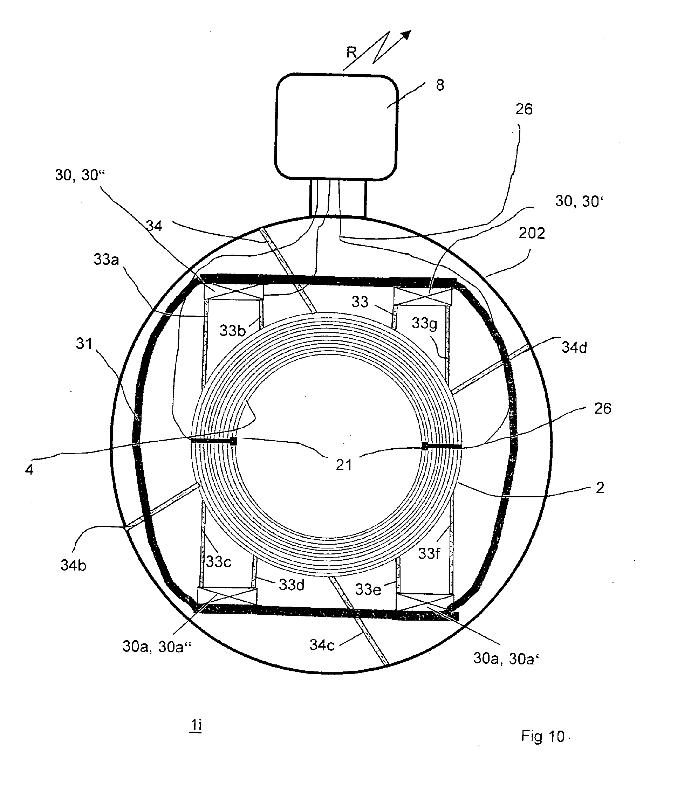

Die Fig. 10 zeigt einen Querschnitt durch eine erfindungsgemäße Ausführungsform eines MID, bei der nur das Messrohr durch Schichten aus Faserverbundmaterial gebildet ist, und die übrigen Teilsysteme wie Signalabgriff, Magnetsystem und Gehäuse in konventioneller Art aufgebaut und montiert sind. In das Messrohr 2 aus Faserverbundmaterial ist ein Paar von konduktiven Signalelektroden 21 eingebettet. Diese Ausführungsform bietet den Vorteil, dass das Messrohr aus Faserverbundmaterial elektrisch nichtleitend und von hoher mechanischer Stabilität, Deformationsresistenz unter Druckbelastung und gleichzeitig hoher chemischer Beständigkeit ist. Es entfällt die Notwendigkeit, eine innere Auskleidungsschicht aufzubringen. Da bei heute nach dem Stand der Technik gefertigten MIDs das Messrohr einen sehr hohen Anteil an den gesamten Entstehungskosten des Gerätes ausmacht, wird durch die in Fig. 10 gezeigte Ausführungsform bereits eine wesentlich kostengünstigere Herstellung ermöglicht, unter Beibehaltung bewährter Methoden zur Fertigung der anderen Teilsysteme und mit geringer Änderung der Fertigungsprozesse.

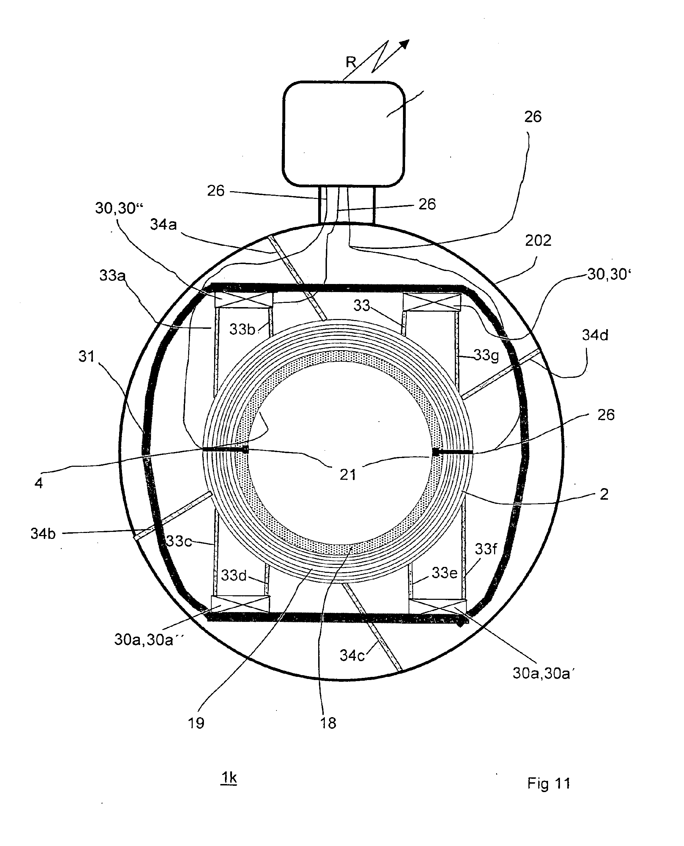

Bei der in Fig. 11 als Querschnittsansicht gezeigten Ausführungsform eines erfindungsgemäßen MIDs ist das Messrohr 2 teilweise aus Faserverbundwerkstoff gebildet, teilweise aus einem anderen Material. Der innere Teil 18 des Messrohres besteht beispielsweise aus Thermoplast, in das ein Paar galvanisch den Messstoff berührender Elektroden 21 als konduktiver Signalabgriff eingebettet sind. Um das Innenrohr aus Thermoplast herum sind Schichten aus Faserverbundmaterial - eine Faserverbund-Einbettung 19 - aufgebracht, beispielsweise nach dem unter Fig. 1 beschriebenen Verfahren, wobei das Innenrohr aus Thermoplast dann als Kern dient anstatt eines entfembaren Metallkerns, und im Unterschied zu diesem im Gerät verbleibt. Durch die Ausbildung des äußeren Rohrteils aus Faserverbundstoff erhält das Messrohr insgesamt eine mechanische Stabilität, Druckfestigkeit und Deformationsresistenz, die das Thermoplastrohr allein nicht hat. Der Vorteil dieser Ausführungsform liegt darin, dass auf eine möglicherweise vorhandene Fertigung sehr preiswerter Thermoplastrohre, in die ja keine Auskleidung zur Isolation gegenüber dem Messstoff eingebracht werden muss, zurückgegriffen werden kann, und der Nachteil der geringen Druckfestigkeit der Thermoplastrohre dann durch die Umschichtung mit Faserverbundwerkstoff aufgehoben ist. Die anderen Teilsysteme wie Magnetsystem und Gehäuse werden konventionell gefertigt. Die Umstellung in der eingeführten Produktionslinie ist sehr gering.

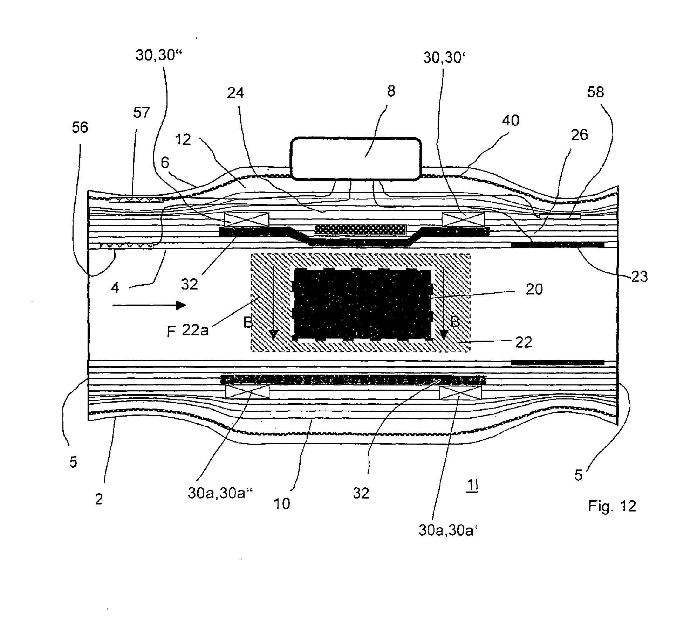

Alle heute üblichen und verfügbaren MIDs sind auf die Messung des Durchflusses von strömenden Stoffen fokussiert und verfügen darüber hinaus über keine zusätzlichen Messmittel, aus denen sich zusätzliche Informationen über andere Messgrößen aus dem Messstoffes oder auch des Messgerätes selbst ableiten und beispielsweise zu Diagnosezwecken verwenden ließen. Fig. 12 zeigt im Längsschnitt eine Ausführungsform eines erfindungsgemäßen MID, das diesen Nachteil des Standes der Technik überwindet. Das Messgerät nach Fig. 12 entspricht im Wesentlichen demjenigen, das in Fig. 2 gezeigt und beschrieben wurde. Zusätzlich sind aber in der Ausführungsform nach Fig. 12 in die Schichten aus Faserverbundmaterial noch weitere Sensoren eingebettet.

Nahe der messstoffseitigen Gerätebegrenzungsfläche 4 ist ein erster Temperatursensor 56 eingebettet. Er wird bei dem unter Fig. 1 beschriebenen Verfahren des Schichtaufbaus an geeigneter Stelle fixiert und umwickelt, analog zum Vorgehen beim Einbetten der Bezugselektrode 23 oder der Messelektrode 20, 20a. Der erste Temperatursensor 56 kann sehr nahe an der messstoffseitigen Gerätebegrenzungsfläche 4 oder auch direkt in Berührung mit dem Messstoff eingebettet werden, so dass mit ihm die Messstofftemperatur an der Rohrinnenwand gut erfasst werden kann. Als Temperatursensor kommen alle gängigen Typen, die heute auch in miniaturisierter Form erhältlich sind, in Frage, wie beispielsweise resistive Temperatursensoren, Thermoelemente oder Halbleiter-Temperatursensoren.

In der Nähe der umgebungsseitigen Gerätebegrenzungsfläche 6 ist ein zweiter Temperatursensor 57 eingebettet. Mit diesem kann die Rohrwandtemperatur oder die Umgebungstemperatur des Messgerätes erfasst werden. Die Verarbeitung der Sensorsignale der beiden Temperatursensoren erfolgt im Transmitter 8, könnte aber auch bereits in der Signalwandlerbaugruppe 24 vorgenommen werden.

Aus der Differenz der von den beiden Temperatursensoren 56, 57 ermittelten Temperaturwerte lässt sich unter Kenntnis der Geometrie und der Materialeigenschaften des Faserverbundmaterials der thermische Wärmestrom und daraus die zwischen dem Messstoff und der Umgebung ausgetauschte Energie berechnen. Damit wäre eine Überwachung der Einhaltung der zulässigen Einsatzgrenzen des Gerätes möglich. Auch die Restlebensdauer des Messrohres oder des ganzen Messgerätes könnte aufbauend auf den erfassten Temperaturwerten abgeschätzt werden. Dazu wird im Transmitter 8 oder bereits in der Signalwandlerbaugruppe 24 zusätzlich ein Mikroprozessor mit Speicher integriert, in dem ein entsprechendes Lebensdauermodell als Software implementiert ist. Die Temperaturmesswerte werden dort gespeichert, der historische Verlauf der Temperaturen wird dann dem Lebensdauermodell als eine Eingangsgröße zugeführt, und die zu erwartende Restlebensdauer wird berechnet und über den Transmitter zur Anzeige oder Weiterverarbeitung in einem übergeordneten Prozessleit- oder Anlagenmanagementsystem weitergeleitet.

Der erste weitere Messaufnehmer 56 kann auch oder zusätzlich ein Drucksensor sein. Er würde nach einem Verfahren wie unter Fig. 1 beschrieben mit hydraulischem Kontakt zu dem Messstoff im Rohrinneren in die Schichten aus Faserverbundwerkstoff eingebettet. Mit einem solchen Messgerät könnten gleichzeitig Druck und Durchfluss des strömenden Stoffes gemessen werden.

Weiterhin ist etwa in der Mitte zwischen der Messrohrinnen- und Außenseite ein Dehnungssensor 58 eingebettet. Dies kann beispielsweise ein Dehnmessstreifen oder eine Dehnmessstreifen-Anordnung in Brückenschaltung aus metallbasierten oder halbleiterbasierten Dehnmessstreifen sein. Mit dem Dehnungssensor 58 wird der mechanische Spannungszustand im Wickelkörper ermittelt. Es können auch mehrere Dehnungssensoren an mehreren Stellen im Messrohr verteilt eingebettet werden. Aus den so gewonnen Informationen kann der mehrachsige Spannungszustand des Messrohres berechnet, und damit die zulässige Beanspruchung in der jeweiligen Einbausituation überwacht werden.

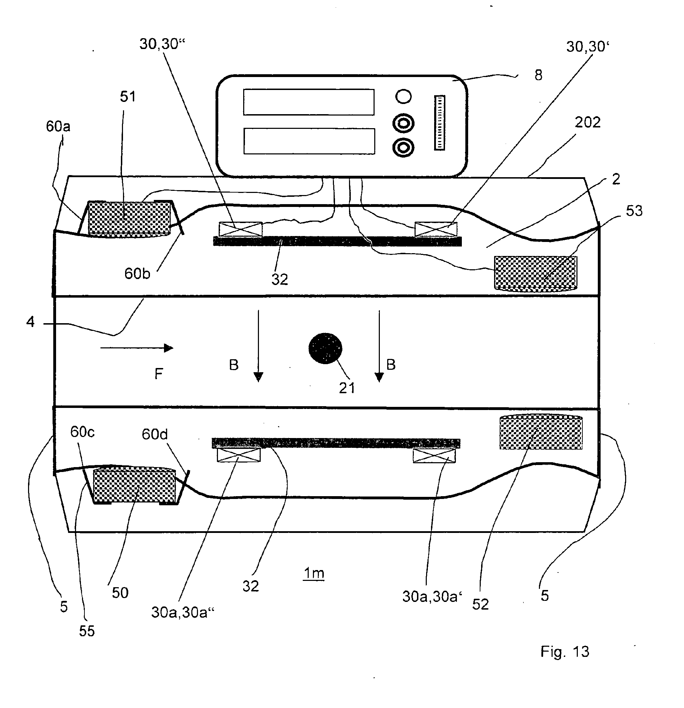

Fig. 13 zeigt im Längsschnitt eine Ausführungsform eines erfindungsgemäßen MID, bei dem das Messrohr mit den darin eingebetteten Teilsystemen zur Signalaufnahme und

Magnetfelderzeugung in transparentes Faserverbundmaterial eingebettet sind. Bauteile aus schichtweise aufgebautem Faserverbundmaterial können transparent gemacht werden, wenn nach dem Wickeln aus mit Harz vorimprägnierten Schichten das Aushärten im Hochvakuum erfolgt. Denn die Glasfasern bei GFK-Werkstoffen sind transparent, die Nicht-Transparenz von Faserverbundwerkstoffen ist begründet in dem Vorhandensein von vielen kleinen Lufteinschlüssen im Harz. Bei der Vakuumbehandlung werden diese entfernt, so dass der Faserverbundwerkstoff dadurch transparent wird.

Bei einem Messrohr aus transparentem Faserverbundwerkstoff können zusätzlich Sensoren eingebettet werden, die auf optischen Wirkprinzipien beruhen. In dem in Fig 13 dargestellten MID ist rechts eine optische Messkette bestehend aus einer Lichtquelle 53 und einem dieser gegenüberliegenden optischen Empfänger 52 in die Schichten aus Faserverbundwerkstoff eingebettet, und zwar so, dass die optischen Fenster von Lichtquelle 53 und Empfänger 52 nur von einer dünnen Lage aus transparentem Faserverbundmaterial vom Messstoff getrennt sind, aus Gründen des Schutzes vor Verschmutzung.

Auf diese Weise kann eine Reihe von optischen Messverfahren realisiert werden und somit zusätzliche weitere Informationen über andere Messgrößen aus dem Messstoff gewonnen werden.

Beispielsweise kann die Lichtquelle 53 eine auf eine bestimmte Wellenlänge abgestimmte Laserdiode sein. Durch Messung der am Empfänger ankommenden Lichtintensität im Verhältnis zu der von der Laserdiode abgestrahlten Lichtintensität lässt sich die Lichtabsorption im Messstoff bei der spezifischen Wellenlänge ermitteln, und daraus Rückschlüsse auf die Zusammensetzung des Messstoffes gewinnen. Damit ist im Prinzip ein kleines Absorptionsspektrometer in das Messrohr aus transparentem Faserverbundwerkstoff einbettbar. Wenn die Lichtquelle 53 ein breites Spektrum ausstrahlt, so kann aus dem Verhältnis der am Empfänger 52 registrierten Gesamtintensität zur gesendeten Lichtintensität eine Information über die Trübung des Messstoffes gewonnen werden. Dies ist beispielsweise bei einer Verwendung des Messgerätes zur Prozessüberwachung in Brauereien sehr vorteilhaft.

Auf der linken Seite des Messrohres 2 in Fig. 13 sind die optischen Sensoren außen auf dem Messrohr mittels Montageelementen 60a,b,c,d angebracht. Dies ist dann vorteilhaft, wenn sehr empfindliche optische Bauelemente eingesetzt werden, beispielsweise solche, die durch beim Aushärten des Harzes möglicherweise auftretende erhöhte Temperaturen geschädigt werden.

Als optische Sensorbauelemente kommen auch beispielsweise optische Bildaufnahmechips, etwa die in Digitalkameras eingesetzten CCD-Chips, in Frage. Mit solchen Bildaufnahmebaugruppen und einer im Transmitter 8 in einem Mikroprozessor mit Speicher hinterlegten Bildverarbeitungssoftware kann eine automatische optische Messstoffüberwachung durchgeführt werden. Beispielsweise könnten strömende transparente Lebensmittel wie Säfte bei der Durchflussmessung gleichzeitig auf das Vorhandensein unerwünschter Störkörper überwacht werden.

Die im Vorstehenden beschriebenen Ausführungsbeispiele geben nicht abschließend alle möglichen Ausführungsformen von erfindungsgemäßen MIDs wieder. Auch alle hier nicht erwähnten, aber sich durch Kombinationen aus den hier beschriebenen Ausführungsformen oder Teilen daraus ergebenden weiteren Ausführungsformen sollen daher von der vorliegenden Anmeldung mit erfasst sein. Insbesondere kann beim Aufbau des Magnetsystems auch so vorgegangen werden, dass - anders als in den Figuren 1 bis 4 beschrieben - zunächst die Erregerspulen auf dem Wickelkörper fixiert werden und darauf dann der ferromagnetische Kern.

## Patentansprüche

1. Magnetisch-Induktives Messgerät (1) für strömende Stoffe (Messstoff), mit wenigstens je einem Teilsystem
- zur Stoffführung (hydraulisches System, Messrohr) (2),
- zur Messsignalerfassung, umfassend einen Signalaufnehmer (Elektrodenanordnung (20, 20a, 22, 22a) zum Signalabgriff),
- zur Erzeugung eines Magnetfeldes, umfassend wenigstens zwei Erregerspulen (30, 30a) und einen ferromagnetischen Kern (32) (Magnetsystem), sowie
- zur umgebungsseitigen Gerätebegrenzung (Gehäuse),
**dadurch gekennzeichnet, dass** wenigstens eines der Teilsysteme ganz oder teilweise durch Schichten aus Faserverbundwerkstoff gebildet und/oder in Schichten von Faserverbundwerkstoff eingebettet ist.

2. Messgerät nach Anspruch 1, **dadurch gekennzeichnet, dass** das Messrohr (2) ganz oder teilweise aus Schichten eines Faserverbundwerkstoffes, insbesondere eines elektrisch nicht leitfähigen Faserverbundwerkstoffes, gebildet ist.

3. Messgerät nach Anspruch 1, **dadurch gekennzeichnet, dass** der Signalaufnehmer (20, 21, 22,23) ganz oder teilweise aus Schichten aus Faserverbundwerkstoff gebildet und/oder in Schichten aus Faserverbundwerkstoff eingebettet ist.

4. Messgerät nach Anspruch 1, **dadurch gekennzeichnet, dass** das Magnetsystem (30, 32) ganz oder teilweise aus Schichten aus Faserverbundwerkstoff gebildet und/oder in Schichten aus Faserverbundwerkstoff eingebettet ist.

5. Messgerät nach Anspruch 1, **dadurch gekennzeichnet, dass** der Signalaufnehmer (20, 21, 22, 23) vollständig und das Magnetsystem (30, 32) vollständig oder in Teilen in Schichten aus Faserverbundwerkstoff eingebettet sind.

6. Messgerät nach Anspruch 1, **dadurch gekennzeichnet, dass** das Gehäuse aus Faserverbundwerkstoff gebildet ist.

7. Messgerät nach Anspruch 1, **dadurch gekennzeichnet, dass** der Signalaufnehmer (20, 21, 22, 23) und das Magnetsystem (30, 32) in das durch Schichten aus Faserverbundwerkstoff gebildete Messrohr (2) eingebettet sind.

8. Messgerät nach einem der vorherigen Ansprüche, **dadurch gekennzeichnet, dass** das Messrohr (2) durch eine Folge von Schichten unterschiedlicher Faserverbundwerkstoffe gebildet ist.

9. Messgerät nach einem der vorherigen Ansprüche, **dadurch gekennzeichnet, dass** die Messrohrwandstärke so groß ist, dass das Messrohr mit den eingebetteten Teilsystemen die auftretenden hydraulischen und mechanischen Lasten aufnehmen kann.

10. Messgerät nach einem der vorherigen Ansprüche, **dadurch gekennzeichnet, dass** der Signalaufnehmer mindestens zwei Messelektroden (20) und elektrische Zuleitungen (26) zu den Elektroden und/oder eine Bezugselektrode (23) zur elektrischen Kontaktierung des Messstoffes umfasst.

11. Messgerät nach einem der vorherigen Ansprüche, **dadurch gekennzeichnet, dass** der Signalaufnehmer mindestens zwei Messelektroden (20) sowie mindestens zwei die Messelektroden (20) gegenüber äußeren Feldern abschirmende Abschirmelektroden (22) und elektrische Zuleitungen (26) zu den Elektroden und/oder eine Bezugselektrode (23) zur elektrischen Kontaktierung des Messstoffes umfasst

12. Messgerät nach einem der vorherigen Ansprüche , **dadurch gekennzeichnet, dass** die Mess- und/oder Abschirm- und/oder Bezugselektroden aus Metallfolie oder biegbarem Blech oder leitfähigem Kunststoff oder leitfähigem Faserverbundmaterial gebildet sind.

13. Messgerät nach einem der vorherigen Ansprüche, **dadurch gekennzeichnet, dass** die Messelektroden aus perforierter Metallfolie oder Metallgewebe oder Gewebe aus leitfähigem Kunststoff gebildet sind.

14. Messgerät nach einem der vorherigen Ansprüche, **dadurch gekennzeichnet, dass** der Signalaufnehmer eine elektronische Signalwandlerbaugruppe (24) umfasst und wenigstens von jeder der Messelektroden (20, 21) eine elektrisch leitende Verbindung (26) zu der Signalwandlerbaugruppe (24) geführt ist.

15. Messgerät nach einem der vorherigen Ansprüche, **dadurch gekennzeichnet, dass** der ferromagnetische Kern (32) in Schichten aus Faserverbundwerkstoff eingebettet ist.

16. Messgerät nach einem der vorherigen Ansprüche, **dadurch gekennzeichnet, dass** die Erregerspulen (30, 30a) zusammen mit dem ferromagnetischen Kern in Schichten aus Faserverbundwerkstoff eingebettet sind.

17. Messgerät nach einem der vorherigen Ansprüche, **dadurch gekennzeichnet, dass** der ferromagnetische Kern (32) aus ferromagnetischer Folie oder ferromagnetischem Blech oder ferromagnetischem Draht oder ferromagnetischem Drahtgeflecht gebildet ist.

18. Messgerät nach einem der vorherigen Ansprüche , **dadurch gekennzeichnet, dass** der ferromagnetische Kern (32) aus Eisen oder Eisen-Nickel oder Kobalt-Eisen oder Silizium-Eisen oder Aluminium-Eisen oder Ferrit gebildet ist.

19. Messgerät nach einem der vorhergehenden Ansprüche, **dadurch gekennzeichnet, dass** die Erregerspulen (30, 30a) aus in faserverstärktem Epoxidharz eingebettetem Kupferdraht gebildet sind.

20. Messgerät nach einem der vorherigen Ansprüche, **dadurch gekennzeichnet, dass** zwischen dem Signalaufnehmer und der umgebungsseitigen Gerätebegrenzungsfläche (6) wenigstens eine Abschirmungsschicht (40) gegen elektrische oder magnetische oder elektromagnetische Felder in die Schichten aus Faserverbundwerkstoff eingebettet ist.

21. Messgerät nach einem der vorherigen Ansprüche, **dadurch gekennzeichnet, dass** die Abschirmschicht (40) aus leitfähigem Faserverbundwerkstoff oder aus Metallfolie oder aus Metallgeflecht gebildet ist.

22. Messgerät nach einem der vorherigen Ansprüche, **dadurch gekennzeichnet, dass** an der umgebungsseitigen Gerätebegrenzung (6) eine elektrische Anschlussvorrichtung (8) angebracht ist und dass von dem Signalaufnehmer und/oder dem Messwandler und den Spulen elektrische Verbindungsleiter zu der elektrischen Anschlussvorrichtung gebildet sind

23. Messgerät nach einem der vorherigen Ansprüche, **dadurch gekennzeichnet, dass** die elektrische Anschlussvorrichtung (8) einen Messumformer umfasst.

24. Messgerät nach einem der vorherigen Ansprüche, **dadurch gekennzeichnet, dass** das Messgerät (1) wenigstens einen weiteren Messaufnehmer (50, 51, 52, 53, 56, 57, 58) zur Erfassung wenigstens einer weiteren Messgröße des Stoffes und/oder des hydraulischen Systems (2) umfasst.

25. Messgerät nach einem der vorherigen Ansprüche, **dadurch gekennzeichnet, dass** das Messgerät (1) einen ersten weiteren Messaufnehmer (56) zur Erfassung einer weiteren Messgröße des strömenden Stoffes und/ einen zweiten weiteren Messaufnehmer (57, 58) zur Erfassung einer Messgröße des hydraulischen Systems umfasst.

26. Messgerät nach Anspruch 25, **dadurch gekennzeichnet, dass** der erste und/oder zweite weitere Messaufnehmer (56, 57) ein Temperatursensor ist.

27. Messgerät nach Anspruch 26, **dadurch gekennzeichnet, dass** der erste Messaufnehmer ein Drucksensor oder ein optischer Trübungssensor oder ein optischer Analysator oder ein bildgebendes optoelektronisches Bauteil ist.

28. Messgerät nach Anspruch 26, **dadurch gekennzeichnet, dass** der zweite Messaufnehmer (58) ein Dehnungsmessstreifen ist.

29. Messgerät nach einem der Ansprüche 24 bis 28, **dadurch gekennzeichnet, dass** mit der aus dem Messsignal des weiteren Messaufnehmers (50, 51, 52, 53, 56, 57, 58) gewonnenen Information eine Gerätediagnose, insbesondere die Überwachung der Einsatzgrenze und/oder die Ermittlung der Restlebensdauer, durchführbar ist.

30. Messgerät nach einem der vorigen Ansprüche, **dadurch gekennzeichnet, dass** die stoffseitige Gerätebegrenzungsfläche (4) nanostrukturiert und adhäsivitätsreduziert ausgebildet ist.

31. Messgerät nach Anspruch 30, **dadurch gekennzeichnet, dass** die stoffseitige Gerätebegrenzungsfläche (4) in Art einer Lotusblattoberfläche strukturiert ist.

32. Messgerät nach einem der vorigen Ansprüche, **dadurch gekennzeichnet, dass** die Schichten aus Faserverbundwerkstoff in Wickeltechnik hergestellt sind.

33. Verfahren zur Herstellung eines Magnetisch-induktiven Messgerätes für strömende Stoffe (Messstoffe), wobei das magnetisch-induktive Messgerät eine stoffseitige Gerätebegrenzungsfläche und eine umgebungsseitige Gerätebegrenzungsfläche aufweist und wenigstens je ein Teilsystem zur Stoffführung (hydraulisches System, Messrohr), zur Messsignalerfassung (Signalaufnehmer), und zur Erzeugung eines Magnetfeldes (Magnetsystem) umfasst, **dadurch gekennzeichnet, dass** alle oder einige der Teilsysteme ganz oder teilweise durch Schichten aus Faserverbundwerkstoff gebildet und/oder in Schichten aus Faserverbundwerkstoff eingebettet werden.

34. Verfahren nach Anspruch 33, **dadurch gekennzeichnet, dass** das Messrohr aus Faserverbundwerkstoff durch schichtweises Aufwickeln von Faserverbund-Halbzeug auf einen Kern hergestellt wird und der Signalaufnehmer und das Magnetsystem in das Messrohr eingewickelt werden.

35. Verfahren nach Anspruch 34, **dadurch gekennzeichnet, dass** der Signalaufnehmer und das Magnetsystem vor dem Einwickeln auf dem bereits gewickelten Messrohrteil positioniert und provisorisch befestigt werden.

36. Verfahren nach Anspruch 35 **dadurch gekennzeichnet, dass** das Messrohr mit den eingewickelten Teilsystemen aus Schichten von harzgetränktem Faserhalbzeug gewickelt und anschließend ausgehärtet wird.

37. Verfahren nach Anspruch 35, **dadurch gekennzeichnet, dass** das Messrohr mit den eingewickelten Teilsystemen aus Schichten von trockenem Faserhalbzeug gewickelt wird und anschließend unter Vakuum das Harz eingezogen wird.

38. Verfahren nach einem der Ansprüche 33 bis 37, **dadurch gekennzeichnet, dass** bereichsweise unterschiedliche Faserverbundwerkstoffe aufgewickelt werden.

39. Verfahren nach Anspruch 38, **dadurch gekennzeichnet, dass** bereichsweise elektrisch nicht leitfähige Faserverbundwerkstoffe und elektrisch leitfähige Faserverbundwerkstoffe aufgewickelt werden.
